# EUROPÄISCHE PATENTSCHRIFT

(11) **EP 1 102 033 B1**
(45) Veröffentlichungstag und Bekanntmachung des Hinweises auf die Patenterteilung: **16.04.2008**
(21) Anmeldenummer: 00123614.0
(22) Anmeldetag: 28.10.2000
(51) Int. Cl.: G01B 17/02

(54) **Verfahren und Vorrichtung zur berührungslosen online Heisswanddickenmessung an Rohren**
Procedure and device for non-contact thickness measurement on hot pipewalls
Procédé et dispositif pour la mesure sans contact de l'épaisseur de parois de tuyaux chauds

(30) Priorität: 17.11.1999 DE 19955136
(43) Veröffentlichungstag der Anmeldung: 23.05.2001
(73) Patentinhaber: SMS Demag AG, 40237 Düsseldorf (DE)
(72) Erfinder: Sauerland, Martin, 41068 Mönchengladbach (DE)
(74) Vertreter: Grosse, Wolf-Dietrich Rüdiger

(56) Entgegenhaltungen:
- EP-A- 0 444 800
- WO-A-99/44051
- MONCAHLIN J-P ET AL: "WALL THICKNESS MEASUREMENT OF TUBES AND ECCENTRICITY DETERMINATION BY LASER-ULTRASONICS" MWSP CONFERENCE PROCEEDINGS, XX, XX, Bd. 35, 1997, Seiten 927-931, XP000912211

## Beschreibung

Die Erfindung betrifft ein Verfahren und eine Vorrichtung zur berührungslosen online Heißwanddickenmessung zur Erfassung unerwünschter Innenwandstrukturen, wie Innenpolygonen oder dergl. an warmgewalzten, insbesondere streckreduzierten Rohren.

Bei der Herstellung nahtloser und geschweißter Stahlrohre wird häufig das sogenannte Streckreduzieren eingesetzt, um in sehr flexibler Weise aus wenigen Vorproduktabmessungen eine Vielzahl in Durchmesser und Wanddicke unterschiedlicher Fertigrohrabmessungen zu erzeugen. Der Vorteil dieses Verfahrens, das ohne Innenwerkzeug auskommt, liegt in der schnellen und kostengünstigen Variation von Wanddicke und Durchmesser.

Die Umformung des Vorrohres erfolgt in einer Vielzahl hintereinander angeordneter Walzgerüste, wobei durch Drehzahlvariation in den einzelnen Gerüsten ein definierter Zug zwischen den Gerüsten erzeugt und damit die Wanddicke des Fertigrohres gezielt eingestellt wird. Die Umformung in der Streckreduzierwalzstraße erfolgt heute in der Regel in Drei- oder Vierwalzengerüsten, deren Kaliber nicht kreisrund sondern drei- oder vierseitig oval ausgeführt sind. Diese Form der Kaliber ist grundsätzlich unvermeidbar, nur das letzte Gerüst einer eingesetzten Gerüstreihe wird im allgemeinen kreisrund ausgeführt, da das fertig gewalzte Rohr weitestgehend kreisrund sein soll.

Durch die Ovalkalibrierung kommt es häufig zu ausgeprägten Wanddickenungleichmäßigkeiten im Querschnitt des streckreduzierten Rohres. Diese Wanddikkenungleichmäßigkeiten haben unterschiedliche Formen. Sie haben z.B. beim Dreiwalzengerüst eine sechseckige Form und werden als Innenpolygon bezeichnet. Beim Vierwalzengerüst ist die Form achteckig. Wie alle anderen Wanddickenabweichungen bedeutet auch die Innenpolygonbildung eine Qualitätseinbuße.

Da die Innenpolygonbildung u.a. von der Wanddicke oder besser gesagt vom Verhältnis Wanddicke zu Rohrdurchmesser abhängig ist, benötigt man eigentlich zur Erzeugung eines großen Wanddickenbereiches unterschiedliche Kalibrierungen der Walzen, d.h. unterschiedliche Ovalitäten der Walzenkalibrierung. Da aber das Vorhalten von Walzgerüsten einen erheblichen Aufwand bedeutet, setzt man im allgemeinen nur zwei unterschiedliche Kalibrierungen ein, eine runde mit geringer Ovalität der Kaliberöffnung für dickwandige Rohre sowie eine ovale mit großer Ovalität der Kaliberöffnung für dünnwandige Rohre. Im übrigen wird versucht, die auftretende Innensechskantbildung klein zu halten, indem die mittlere Zugspannung oder der ,Zug' im Walzgut bei der Umformung optimal eingestellt wird; denn man hat durch Versuche festgestellt, daß sich das Polygonmaß in Abhängigkeit vom Zug ändert. Hat man diese Zugoptimierung mit viel Mühe durchgeführt, erzielt man trotzdem nicht immer innenpolygonarme Rohre, da aktuelle Änderungen der Einflußgrößen auftreten, die unvermeidbar sind, d.h. eine Innenpolygonbildung infolge aktuell sich ändernder Umformbedingungen mußte in Kauf genommen werden und es mußte ein erheblicher Aufwand getrieben werden, um im Vorfeld der Produktion eine Optimierung durchzuführen.

Nahtlose Stahlrohre werden gewöhnlich in den drei Umformstufen Lochen in einem Schrägwalzwerk, Strecken in einem Assel-, Konti- oder anderem Walzwerk und Fertigwalzen in einem Streckreduzierwalzwerk hergestellt. Alle drei Umformstufen verursachen in der Rohrwand charakteristische, unerwünschte Abweichungen vom Nennmaß, die von jeder nachfolgenden Umformstufe überlagert werden und sich in dieser überlagerten Form in der Wand des streckreduzierten Rohres wiederfinden. Beispielsweise entstehen in einem Zweiwalzen-Schrägwalzwerk zwei spiralförmig um das Rohr herumlaufende Wandverdickungen, die sich im Querschnitt des Rohres als eine umlaufende Exzentrizität äußern. Besteht die zweite Umformstufe aus einem Asselwalzwerk, können ebenfalls spiralförmig um das Rohr herumlaufende Verdickungen auftreten, die entweder gleichsinnig, aber mit anderer Steigung um das Rohr herumlaufen oder aber eine entgegengesetzte Drehrichtung haben können und die Spiralen des Schrägwalzwerkes kreuzen.

Bei in einer Kontistraße vorgewalzten streckreduzierten Rohren hingegen kann zusätzlich zum Innenpolygon des SRW's und zum umlaufenden Exzenter der Schrägwalze noch eine Vierkantbildung auftreten. Diese Vierkantbildung ist am SRW-Auslauf in ihrer Phasenlage feststellbar, so daß eine Voraussetzung dafür gegeben ist, um diesen Innenstörungen entgegenzuwirken.

Das Problem auftretender unerwünschter Wandstrukturen bei Rohren könnte gelöst werden, wenn es gelänge, während des Produktionsprozesses eine Korrektur der Innenfehlerbildung mittels eines Regelkreises durchzuführen, etwa durch Variation der Zugparameter (Änderung der Drehzahlreihe). Da bekanntlich zwischen dem Parameter der Zugverteilung und der Innenpolygonbildung ein eindeutiger Zusammenhang existiert, könnte man die Innenpolygonbildung automatisch reduzieren, ohne die Wanddicke des Vorrohres zu beeinflussen. Das setzt aber voraus, daß man den Verlauf der Innenpolygonbildung und der ihr überlagerten Fehler kennt, z.B. durch berührungslose Vermessung der Wanddicke der walzwarmen Rohre unmittelbar nach dem Walzen, wenn diese mit konstanter Rohrmitte aus dem Walzwerk laufen. Das setzt aber ein wirtschaftliches Meßverfahren und eine kostengünstige Meßgeräteinrichtung voraus, das bzw. die, neben der Messung des Wanddickenverlaufes über der Länge der Rohres bzw. über die Durchlaufzeit, wichtige Informationen über die beim Streckreduzieren auftretenden Innenpolygonbildungen liefert.

Die EP 0444 800A2 offenbart ein Rohrmesssystem, bei dem Messköpfe mit hoher Umlaufgeschwindigkeit um das zu vermessende Rohr umlaufen. Zum Einsatz kommen hier Ultraschall-Messsysteme für die Ermittlung der Rohrdicke, die relativ klein bauen und ein schnelles Umlaufen um das Rohr zulassen.

Ausgehend von den vorstehend beschriebenen Problemen des Standes der Technik besteht die Aufgabe der vorliegenden Erfindung darin, ein Verfahren und eine Vorrichtung zur berührungslosen online Heißwanddickenmessung zu schaffen, mit dem bzw. der unerwünschte Wandstrukturen wie Innenpolygone, Exzenter oder Vierkante mit minimalem meßtechnischen Aufwand erfaßt werden, um frühzeitig Maßnahmen zur Qualitätsverbesserung ergreifen zu können.

Zur Lösung der Aufgabe wird erfindungsgemäß vorgeschlagen, daß mit Hilfe des Laser-Ultraschallverfahrens und unter Verwendung mindestens eines Meßkopfes ein Segment der Wand des zu messenden Rohres während des oder unmittelbar nach dem Walzprozeß in Umfangsrichtung gescannt und ggf. durch mathematische Analysen und Symmetriebetrachtungen der Wandverlauf der Rohrquerschnittes in einem Rechner rekonstruiert wird, wobei bei Verwendung mehrerer in Umfangsrichtung verschwenkender Meßköpfe jeder Meßkopf einen anderen zugewiesenen Abschnitt der Rohrwand bestreicht.

Mit dem Laser- Ultraschall -Wanddickenmeßverfahren wird das klassische Prinzip der Ultraschall-Laufzeitmessung angewandt. Aus der Zeit für das (zweimalige) Durchlaufen eines Ultraschallimpulses durch die Rohrwand ergibt sich bei bekannter Schallgeschwindigkeit die gesuchte Wanddicke. Da die Ankopplung des Ultraschalles bei der Heißwanddickenmessung mit Temperaturen in der Größenordnung von 1000 °C sowohl auf der Anregungs- als auch auf der Detektionsseite berührungslos erfolgen muß, verwendet man dazu optische Methoden, bei denen der Meßkopf selbst in einem thermisch sicheren Abstand zum Meßgut verbleiben kann. Hochenergetische Lichtimpulse im Infrarotbereich, erzeugt von einem auf das Meßgut ausgerichteten, blitzlampen-gepumpten Laser werden in der Rohroberfläche absorbiert, was teilweise zur Verdampfung einer extrem dünnen Oberflächenschicht führt. Durch den Verdampfungsimpuls entsteht aufgrund der Impulserhaltung im Rohr ein Ultraschallimpuls, der senkrecht zur Rohroberfläche in die Rohrwand einläuft. Der so entstandene Ultraschallimpuls wird an der Rohrinnenoberfläche reflektiert, läuft zurück zur Außenoberfläche, wird erneut reflektiert usw., so daß im Meßgut eine Ultraschall-Echofolge abnehmender Amplitude entsteht. Der reflektierte Ultraschallimpuls erzeugt auf der Rohraußenoberfläche Schwingungen im Sub-Miniaturbereich, die wiederum berührungslos mit Hilfe eines zweiten Lasers im Dauerlichtbetrieb unter Ausnutzung des Doppler-Effektes erfaßt werden. Die im Vergleich zur Lichtfrequenz niederfrequente US-Schwingung führt zu einer Frequenz-Modulation des an der Materialoberfläche reflektierten Lichtes.

Das Laser-Ultraschall-Wanddickenmessverfahren ist als solches bekannt. Es wird auf die WO 99/44051 und auf den Beitrag "Wall Thickness Measurement of Tubes and Eccentricity Determination by Laser-Ultrasonics" von J.-P. Monchalins et al., 39th Mechanical Working and Steel Processing Conference Proceedings., Vol. XXXV (1998), 927-931, XP000912211, hingewiesen.

Der reflektierte Lichtkegel, der jetzt _{"}Träger" des Ultraschallsignales ist, wird über eine lichtstarke Sammellinse und einen Lichtwellenleiter dem optischen Demodulator, einem konfokalen Fabry-Perot-Interferometer, zugeführt, dessen Ausgangssignal bereits die Ultraschall-Echofolge beinhaltet. Die weitere Verstärkung, Filterung und Signalauswertung der Ultraschall-Echofolge erfolgt mit einer "konventionell" arbeitenden Ultraschall-Auswerteelektronik, deren Ausgangssignal die Wanddickenwerte sind, die in einem zum System gehörigen Rechner weiterverarbeitet werden.

Durch das erfindungsgemäße Scannen eines Segmentes der Rohrwand können unerwünschte, die Qualität mindernde Strukturen im Rohrquerschnitt mit einem minimalem meßtechnischen Aufwand erfaßt werden. So kann z.B. bei Einsatz geschweißter Luppen in SRW-Linien das in der Phasenlage feststehende Innenpolygon (6- oder 8-kant) mit der punktförmigen Laser- Ultraschall - Wanddickenmessung bereits einkanalig, d.h. mit einem einzigen Meßkopf gemessen und damit erkannt werden. Maßnahmen zur Qualitätsverbesserung durch den Walzwerksbetreiber können frühstmöglich ergriffen werden.

In einer Ausgestaltung der Erfindung wird vorgeschlagen, daß bei maximal vier am Umfang des Rohres verteilt angeordneten Meßköpfen mindestens einer der Meßköpfe über ein in Abhängigkeit von der zu erwartenden Ordnung der unerwünschten Innenstruktur zu bestimmendes Winkelsegment in Umfangsrichtung des Rohres verschwenkt wird. Bei überlagerten umlaufenden Strukturen (z.B. beim Streckreduzieren von Asselluppen) kann mit nur drei scannenden Meßköpfen (3 Punkte legen einen Kreis fest), von denen mindestens einer in Rohrumfangsrichtung verschwenkbar ist, unter Ausnutzung von Symmetrieeigenschaften bereits die gleiche Information über die Rohrstrukturen gewonnen werden, wie sie sonst nur mit 7 oder mehr feststehenden Meßköpfen gewonnen werden könnte. Bei schwenkbaren Meßköpfen oder der Kombination von feststehenden und schwenkbaren scannenden Meßköpfen werden die Rohrquerschnitte durch mathematische Analysen (z.B. Fourier-Analysen), durch Überlagerungen und durch Symmetriebetrachtungen rekonstruiert.

Vorzugsweise erfolgen nach einem weiteren Merkmal der Erfindung die Schwenkzyklen der Meßköpfe in Abhängigkeit von der Walzgeschwindigkeit. So reichen beispielsweise bei Walzzeiten in der Größenordnung von 30 Sekunden relativ lange Schwenkzyklen mit Perioden von ≈ 10 Sekunden aus, um die Polygonbildung sichtbar zu machen.

Um die Erfassung der Abweichungen der Rohrwandquerschnitte zu ermöglichen, ist der bzw. sind die Meßköpfe mit einer Auswerteelektronik verbunden, die vorzugsweise geschützt im Abstand zu der Meßvorichtung in einen Elektroschalthaus oder in einer Meßkabine angeordnet ist. Zu der Meßvorichtung gehört ein Bediener-PC nahe dem Streckreduzierwalzwerk.

In der konventionell arbeitenden Auswerteelektronik erfolgt die Verstärkung, Filterung und Signalauswertung der Ultraschall-Echofolge, deren Ausgangssignal die Wanddickenwerte sind, die im Rechner weiterverarbeitet werden.

Günstigerweise sind zum zum Messen von streckreduzierten Rohren, deren Vorrohre in einem Schrägwalzprozeß erstellt wurden, 3 Meßköpfe um den Umfang des Rohres gleichmäßig verteilt angeordnet, die gemeinsam um ca. 70°verschwenkbar sind. Wie eingangs beschrieben, tritt nämlich bei diesen Rohren hinter dem Streckreduzierwalzwerk neben der Sechskant- bzw. Polygonbildung ein im allgemeinen umlaufender Exzenter auf, der, bei drei unter 120° angeordneten gemeinsam geschwenkten Meßköpfen, alle drei Meßköpfe so beeinflußt, daß zu jeder Winkelstellung der innere Exzenter frei vom überlagerten Polygon bestimmt werden kann.

Alternativ können nach einem anderen Merkmal der Erfindung zum Messen von streckreduzierten Rohren, deren Vorrohre in einem Schrägwalzprozeß erstellt wurden, auch 4 Meßköpfe L1 bis L4 um den Umfang des Rohres gleichmäßig verteilt angeordnet werden, von denen mindestens ein Meßkopf um ca. 70° verschwenkbar ist, wobei letzterer den Verlauf der exzentrischen Wand ermittelt.

Schließlich kann das erfindungsgemäße Meßverfahren auch zum Messen von in einer Kontistraße vorgewalzten streckreduzierten Rohren verwendet werden, wobei dann erfindungsgemäß 3 oder 4 Meßköpfe um den Umfang des Rohres verteilt angeordnet sind, von denen mindestens ein Meßkopf um ca. 90° verschwenkbar ist. Beim Kontiwalzen überlagert eine Vierkantbildung den Sechskant des Streckreduzierwalzwerkes und den umlaufenden Exzenter der Schrägwalze, wobei die Phasenlage des Vierkantes im Auslauf des Streckreduzierwalzwerkes wiederum erkannt werden kann. Mit maximal 4 Meßköpfen, von denen mindestens einer verschwenkbar ist, lassen sich alle die dort auftretenden Wandunregelmäßigkeiten erfassen und letztlich ausregeln.

Das erfindungsgemäße Meßverfahren und Meßsystem ist auch bei Stoßbankanlagen anwendbar ist, wobei dort die Anzahl der Kanäle und Schwenkwinkel der Meßköpfe in Abhängigkeit von den tatsächlichen Strukturen angepaßt werden muß.

Der Vorteil der vorliegenden Erfindung wird darin gesehen, daß durch die Verwendung von mindestens einzelnen verschwenkbaren, nach dem Laser-Ultraschallverfahren arbeitenden Meßköpfen, von denen die verschwenkbaren Meßköpfe nur einen Teil (Segment) der Rohrwand erfassen, mit vergleichbar geringer Meßkopfanzahl unter Ausnutzung von Apriori-Wissen über den Walzprozeß mehr Qualitätsmerkmale erfaßt und genutzt werden können, als das bei konventionellen statischen Mehrkanalgeräten. Dies führt letztendes zu einer beträchtlichen Kostenreduzierung und zu einem wirtschaftlichen Verfahren.

Nachfolgend wird die Erfindung anhand verschiedener schematischer Zeichnungsfiguren erläutert. Es zeigt:
- Fig.1: eine erfindungsgemäße Vorrichtung mit nur einem Meßkopf,
- Fig.2: zeigt den Querschnitt eines Rohres mit einem Sechskant-Innenpolygon,
- Fig.3: eine erfindungsgemäße Vorrichtung mit drei Meßköpfen,
- Fig.4: erläutert in einer schematischen Darstellung das Prinzip der Erfindung und
- Fig.5: zeigt schematisch die Meßkopfanstellmechanik mit und Justier-Möglichkeiten für Radius und Höhenanpassung an die Walzmitte.

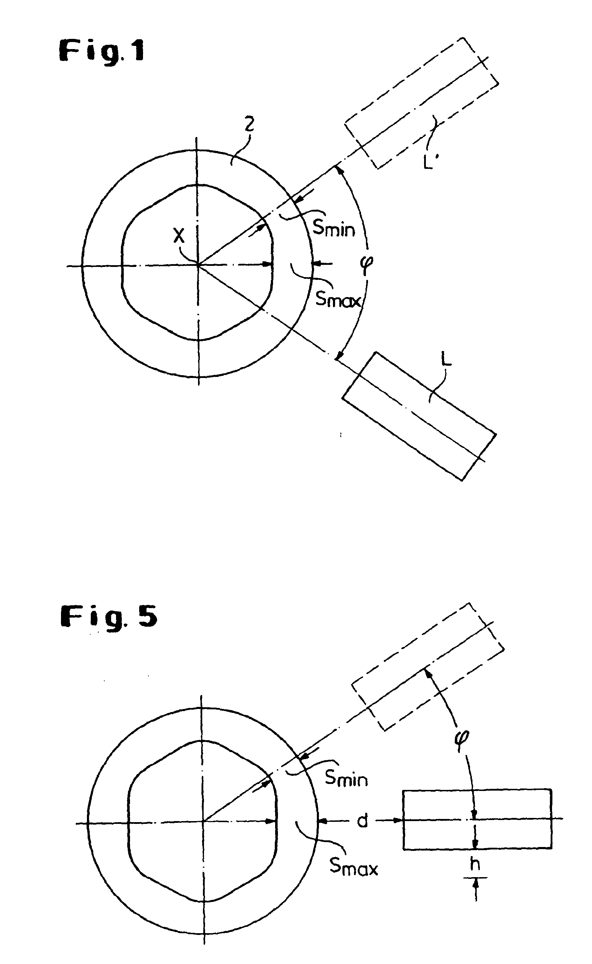

Fig. 1 zeigt eine Vorrichtung mit nur einem Meßkopf L, der im Winkel ϕ um den Drehpunkt X in Mittelpunkt des Rohres 3 zur Position L' geschwenkt wird. Das Sechskantpolygon wird durch die dünnste Wand Sₘᵢₙ und die dickste Wand Sₘₐₓ gekennzeichnet. Die Form des Polygons ist regelmäßig, weil der Mittelpunkt des Außenkreises und der Mittelpunkt des Polygons im Schnittpunkt X der beiden Mittellinien liegen. In der Figur 1 ist ein Sechskant-Polygon und ein Schwenkwinkel ϕ des Scanners L von 70 ° dargestellt. Bei einem Sechskant-Polygon würde ein Schwenkwinkel von 30 ° reichen, wie es die Fig. 5 zeigt, und zwar von Spin zu Sₘₐₓ, um einen vollen Rohrquerschnitt rekonstruieren zu können. Der Winkel von 70 ° bietet deshalb die doppelte Sicherheit, weil er zwei spiegelbildlich symmetrische Sektionen des Rohres erfaßt, dadurch eine Vergleichsmöglichkeit entsteht und eine Plausibilitätskontrolle der Meßergebnisse leichter möglich ist.

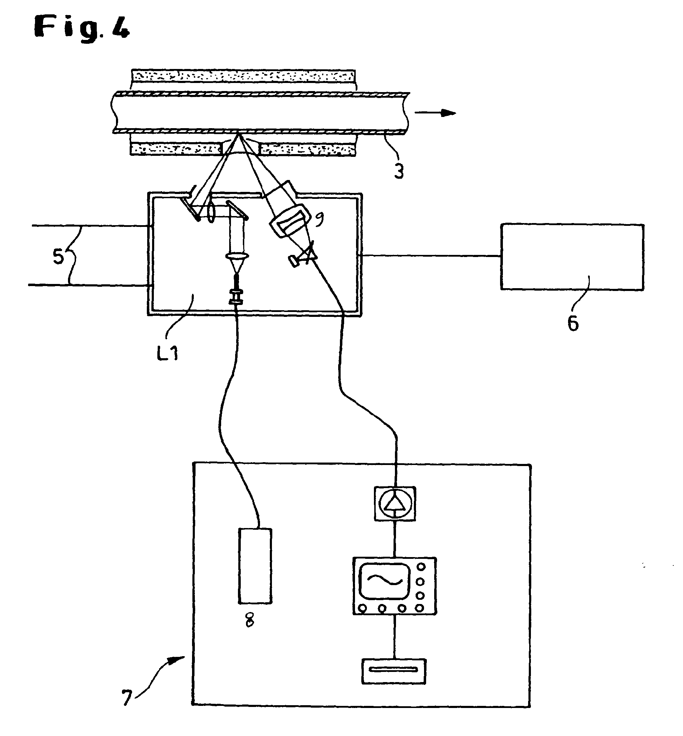

Die eigentliche Meßvorrichtung zur berührungslosen online Heißwanddickenmessung besteht aus mindestens einem auf die zu messende Rohrdimension anstellbaren kompakten Laser-Ultraschall-Meßkopf L1, in dem die Anregungs- und Beleuchtungs-Laser 8 zusammen mit den optischen Elementen 9 (s. Fig. 4) zur Sammlung des an der Oberfläche des Rohres 3 reflektierten, das Ultraschallsignal enthaltenden Trägerlichtes, untergebracht sind und der mittels einer - nicht dargestellten - Schwenkvorrichtung über ein Segment des Rohres 3 in Umfangsrichtung verschwenkbar ist. Dabei ist es grundsätzlich gleichgültig, welcher Art die Schwenkvorrichtung ist, wichtig ist nur, daß ein festgelegtes Segment des Rohrumfanges erfaßt werden kann.

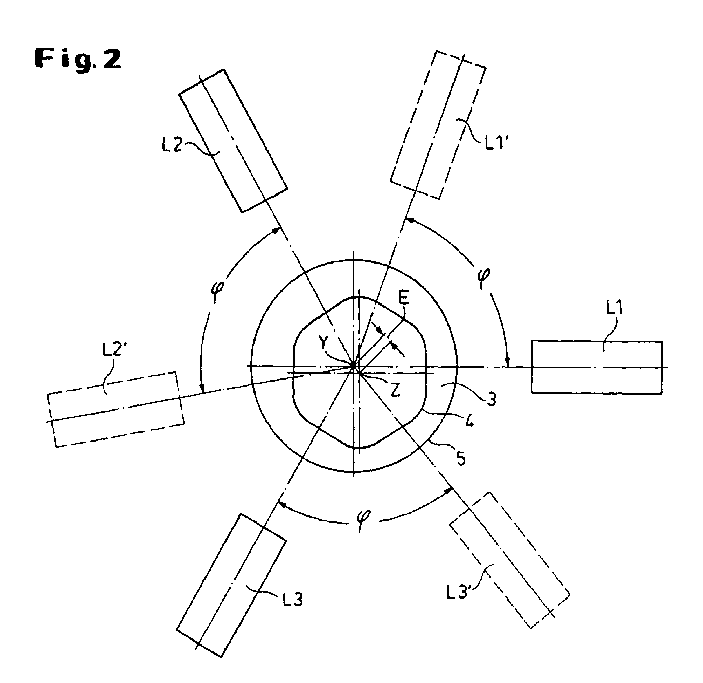

Die Fig. 2 zeigt hierzu den Querschnitt eines Rohres 3 mit einem Sechskant-Innenpolygon 4, dessen Mittelpunkt Z um den Abstand E vom Mittelpunkt Y des Außenkreises 5 entfernt liegt. Da diese Exzentrizität des Rohres von einer umlaufenden Spirale gebildet wird, läuft auch der Abstand E in Längsrichtung des Rohres um den Mittelpunkt Y herum mit der Folge, daß auch die dünnste Stelle Sₘᵢₙ und die dickste Stelle Sₘₐₓ (Fig.1) des Rohres 3 um den Mittelpunkt Y herumlaufen. Die drei Meßköpfe L1 bis L3 sind in der Grundstellung in einem Winkel von 120° um das Rohr herum verteilt bei einem gleichen Abstand vom Mittelpunkt Y des Rohres. Alle drei Meßköpfe schwenken in gleicher Richtung hin und hergehend um den Winkel ϕ um das Rohr herum und zwar Meßkopf L1 nach L1', L2 nach L2' usw. Der Meßkopf L1 ist beispielhaft in horizontaler Richtung dargestellt, kann aber in seiner Grundstellung auch so eingestellt werden, daß sein Schwenkwinkel symmetrisch zum Innenpolygon liegt, bei einem Schwenkwinkel ϕ von z. B. 70° um 5° schräg nach unten geneigt, bezogen auf die horizontale Ebene.

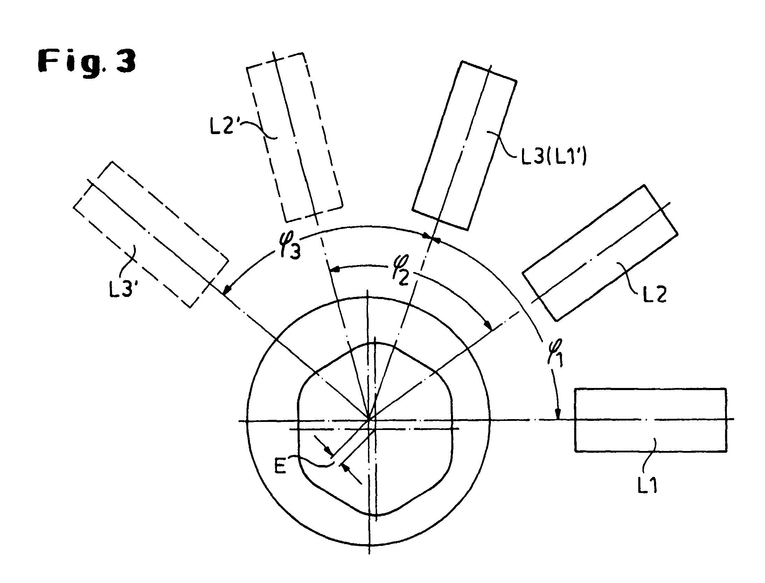

Die schwenkbaren Meßköpfe L1 bis L3 haben den Vorteil, daß man ihre Winkelgrundstellungen bzw. ihre Schwenkwinkel ϕ während des laufenden Walzvorgangs verändern kann. Wie die Fig. 3 in einem anderen Beispiel zeigt, lassen sich z. B. die Meßköpfe L1 bis L3 in ihrer Grundstellung - ausgehend von der Positionierung in Fig. 2 - so verändern, daß sich ihre Schwenkwinkel ϕ teilweise überdecken können. In der Fig. 3 werden drei Meßköpfe L1 bis L3 dargestellt, die in der Grundstellung um 70° zueinander versetzt sind. Werden nun die Scanner um ϕ₁=ϕ₂=ϕ₃ = 70° geschwenkt, wird der Winkel ϕ₂ doppelt gescannt und zwar so, daß die Meßpunkte einen definierten Versatz zueinander haben. Pro Flächeneinheit kann man die Menge der Meßpunkte also verdoppeln oder sogar verdreifachen. Es wäre also vorstellbar, daß der Steuermann während des laufenden Betriebes die Winkellage der Scanner abweichend von der Normalstellung, in der mit normaler Auflösung gemessen wird, so verstellt, daß er auf einer bestimmten Länge des Rohres den Meßraster verdichtet und sich so praktisch eine Vergrößerung des Rohrausschnittes anzeigen läßt (Lupenfunktion).

In Fig. 4 wird nachfolgend anhand einer schematischen Darstellung das Prinzip der Erfindung am Beispiel eines 1-Kanal Meßkopfes erläutert:

Das Meßsystem besteht aus dem auf den zu messende Durchmesser des Rohres 3 anstellbaren Meßkopf L1 mit zugehörigen Versorgungselementen 5 (Druckluft, Kühlwasser) vor Ort, der Steuer- und Auswerteelektronik im Elektroschalthaus 6, sowie dem Bediener-PC auf der Steuerbühne 7 des SRW. Zwischen Meßkopf L1 vor Ort, Elektroschalthaus 6 und Steuerbühne 7 sind größere Entfernungen möglich. Grundsätzlich ist das Wanddickenmeßgerät für die rauhen Umgebungsbedingungen in Warmwalzwerken konzipiert.

Der Meßkopf L1 mit einem Spezialgehäuse mit wassergekühlter Frontseite und hitzebeständigem Fenster aus Quarzglas enthält im wesentlichen die nachfolgend aufgeführten - weil bekannt nicht dargestellten - Elemente:
nämlich den Ultraschall-Anregungszweig mit dem Kopf des blitzlampen-gepumpten Nd:YAG-lmpuls-Lasers und der Fokussierungslinse, dem Detektionszweig mit dem cw-Laser einschließlich Controller, mit dem Infrarot-Filter, der Aufweiteoptik mit Umlenkspiegel und Umlenkprisma, einem lichtstarken Abbildungs-Objektiv für die Sammlung des von der Rohroberfläche zurückgestreuten USmodulierten Lichtes ,

Weiterhin gehören (siehe Fig.5) zum Bereich des Meßkopfes L die ebenfalls nicht dargestellte Sensorik für das Erkennen des Rohreinlaufes für die Bildung des Start/Stop-Signales,
die Meßkopfanstellmechanik mit Schwenkvorrichtung und Justier-Möglichkeiten für Radius und Höhenanpassung an die Walzmitte (Abstand h),
die manuelle oder vollautomatische Dimensionsanpassung bei Rohr-Durchmesseränderung (Abstand "d"),
die Meßkopf-Verfahrung (motorisch im Tippbetrieb) mit mechanischem Anschlag für Service und Meßposition,
die Winkeleinstellung (Winkel " ϕ "), einstellbar für ein Winkelsegment von ca. 30°, um hinter dem Streckreduzierwalzwerk bei starker Polygon-Bildung die Meßbahn zwischen Min.- und Max.-Wand variieren, d.h. den Meßkopf schwenken zu können, i.d.R. mit automatische, motorischer Winkelverstellung mit Antrieb, Absolutgeber und Endlagenüberwachung.

## Patentansprüche

1. Verfahren zur berührungslosen Online-Heißwanddickenmessung zur Erfassung unerwünschter Innenwandstrukturen, wie Innenpolygonen oder dergleichen, an warmgewalzten Rohren (3),
**dadurch gekennzeichnet,**
**dass** mit Hilfe des Laser-Ultraschallverfahrens und unter Verwendung mehrerer Messköpfe (L1, L2, L3, L4) von jedem Messkopf ein Segment der Wand des zu messenden Rohres (3) während des oder unmittelbar nach dem Walzprozess in Umfangsrichtung gescannt und durch mathematische Analysen und Symmetriebetrachtungen der Wandverlauf des Rohrquerschnittes in einem Rechner rekonstruiert wird, wobei die Messköpfe (L1, L2, L3, L4) in Umfangsrichtung hin und hergehend um das Rohr (3) herum verschwenkbar sind und jeder Messkopf (L1, L2, L3, L4) einen anderen zugewiesenen Abschnitt der Rohrwand bestreicht.

2. Verfahren nach Anspruch 1,
**dadurch gekennzeichnet,**
**dass** von maximal vier am Umfang des Rohres (3) verteilt angeordneten Messköpfen (L1, L2, L3, L4) mindestens einer der Messköpfe über ein in Abhängigkeit von der zu erwartenden Ordnung der unerwünschten Innenstruktur zu bestimmendes Winkelsegment in Umfangsrichtung des Rohres (3) verschwenkt wird.

3. Verfahren nach Anspruch 1 oder 2,
**dadurch gekennzeichnet,**
**dass** die Schwenkzyklen der Messköpfe (L1, L2, L3, L4) in Abhängigkeit von der Walzgeschwindigkeit festgelegt werden.

4. Vorrichtung zur berührungslosen Online-Heißwanddickenmessung zur Erfassung unerwünschter Innenwandstrukturen, wie Innenpolygonen oder dergleichen, an warmgewalzten Rohren,
**gekennzeichnet durch**
mehrere auf die zu messende Rohrdimension anstellbare kompakte Laser-Ultraschall-Messköpfe (L1, L2, L3, L4), in denen Anregungs- und Beleuchtungs-Laser (8) zusammen mit optischen Elementen (9) zur Sammlung des an der Oberfläche des Rohres (3) reflektierten, das Ultraschall-Signal enthaltenden Trägerlichtes, untergebracht sind, wobei die Laser-Ultraschall-Messköpfe (L1, L2, L3, L4) mittels einer zur Vorrichtung gehörigen Schwenkvorrichtung über ein Segment des Rohres (3) in Umfangsrichtung hin und hergehend um das Rohr (3) herum verschwenkbar sind.

5. Vorrichtung nach Anspruch 4,
**dadurch gekennzeichnet,**
**dass** die Laser-Ultraschall-Messköpfe (L1 L2, L3, L4) mit einer Steuer- und Auswerteelektronik (6) verbunden sind.

6. Vorrichtung nach Anspruch 4 oder 5,
**dadurch gekennzeichnet,**
**dass** die den Wanddickenwerten entsprechenden Ausgangssignale der Ultraschall-Auswertung in einem zum System gehörigen PC weiterverarbeitet werden.

7. Vorrichtung nach einem der Ansprüche 4 bis 6,
**dadurch gekennzeichnet,**
**dass** zum Messen von streckreduzierten Rohren (3), deren Vorrohre in einem Schrägwalzprozess erstellt wurden, drei Messköpfe (L1, L2, L3) um den Umfang des Rohres (3) gleichmäßig verteilt angeordnet und gemeinsam um 70° verschwenkbar sind.

8. Vorrichtung nach einem der Ansprüche 4 bis 6,
**dadurch gekennzeichnet,**
**dass** zum Messen von streckreduzierten Rohren (3), deren Vorrohre in einem Schrägwalzprozess erstellt wurden, vier Messköpfe (L1, L2, L3, L4) um den Umfang des Rohres (3) gleichmäßig verteilt angeordnet sind, von denen mindestens ein Messkopf um 70° verschwenkbar ist.

9. Vorrichtung nach einem der Ansprüche 4 bis 6,
**dadurch gekennzeichnet,**
**dass** zum Messen von in einer Kontistraße vorgewalzten streckreduzierten Rohren (3) drei oder vier Messköpfe (L1 L2, L3, L4) um den Umfang des Rohres (3) verteilt angeordnet sind, von denen mindestens ein Messkopf um 90° verschwenkbar ist.

10. Vorrichtung nach einem der Ansprüche 4 bis 9,
**dadurch gekennzeichnet,**
**dass** sich die Schwenkwinkel der Messköpfe (L1, L2, L3, L4) teilweise überdecken.

## Claims

1. A method for contactless online measurement of hot wall thickness to detect undesirable inner wall structures such as inner polygons or the like on hot-rolled pipes (3),
**characterised in**
**that** with the aid of the laser ultrasound method and using a plurality of measuring heads (L1, L2, L3, L4), a segment of the wall of the pipe (3) to be measured can be scanned by each measuring head during or directly after the rolling process in the circumferential direction and the wall profile of the pipe cross-section can be reconstructed in a computer by mathematical analyses and symmetry considerations, wherein the measuring heads (L1, L2, L3, L4) can be pivoted to and fro around the pipe (3) in the circumferential direction and each measuring head (L1, L2, L3, L4) sweeps a different allocated section of the pipe wall.

2. The method according to claim 1,
**characterised in**
**that** from a maximum of four measuring heads (L1, L2, L3, L4) distributed around the circumference of the pipe (3), at least one of the measuring heads is pivoted over an angular segment in the circumferential direction of the pipe (3) to be determined depending on the order of the undesirable inner structure which is to be expected.

3. The method according to claim 1 or 2,
**characterised in**
**that** the pivoting cycles of the measuring heads (L1, L2, L3, L4) are specified depending on the rolling speed.

4. A device for contactless online measurement of hot wall thickness to detect undesirable inner wall structures such as inner polygons or the like on hot-rolled pipes
**characterised by**
a plurality of compact laser-ultrasound measuring heads (L1, L2, L3, L4) which can be adjusted to the pipe dimension to be measured and which accommodate exciting and illuminating lasers (8) together with optical elements (9) for collecting the carrier light containing the ultrasound signal, reflected at the surface of the pipe (3), wherein the measuring heads (L1, L2, L3, L4) can be pivoted to and fro around the pipe (3) in the circumferential direction by means of a pivoting device pertaining to the apparatus.

5. The device according to claim 4,
**characterised in**
**that** the laser-ultrasound measuring heads (L1, L2, L3, L4) are connected to control and evaluation electronics (6).

6. The device according to claim 4 or 5,
**characterised in**
**that** the output signals of the ultrasound evaluation corresponding to the wall thickness values are further processed in a PC pertaining to the system.

7. The device according to any one of claims 4 to 6,
**characterised in**
**that** for measuring stretch-reduced pipes (3) whose pipe blanks were produced in a skew rolling process, three measuring heads (L1, L2, L3) are distributed uniformly around the circumference of the pipe (3) and can be jointly pivoted by 70°.

8. The device according to any one of claims 4 to 6,
**characterised in**
**that** for measuring stretch-reduced pipes (3) whose pipe blanks were produced in a skew rolling process, four measuring heads (L1, L2, L3, L4) are distributed uniformly around the circumference of the pipe (3) of which at least one measuring head can be pivoted by 70°.

9. The device according to any one of claims 4 to 6,
**characterised in**
**that** for measuring stretch-reduced pipes (3) prerolled in a continuous train, three or four measuring heads (L1, L2, L3, L4) are distributed uniformly around the circumference of the pipe (3) of which at least one measuring head can be pivoted by 90°.

10. The device according to any one of claims 4 to 9,
**characterised in**
**that** the pivot angles of the measuring heads (L1, L2, L3, L4) partially overlap.

## Revendications

1. Procédé de mesurage sans contact d'épaisseurs de parois chaudes en ligne, pour la détection de structures indésirables dans les parois internes, telles que des polygones internes ou autres, sur des tuyaux laminés à chaud (3),
**caractérisé en ce que**
à l'aide du procédé à ultrasons laser et de l'utilisation de plusieurs têtes de mesurage (L1, L2, L3, L4), un segment de paroi du tuyau à mesurer (3) est balayé dans le sens du pourtour, par chacune des têtes de mesurage, pendant ou immédiatement après le procédé de laminage, et le développement de paroi de la section transversale du tuyau est reconstruite sur un ordinateur, par des analyses mathématiques et des observations de symétrie, les têtes de mesurage (L1, L2, L3, L4) pouvant pivoter dans un sens et dans l'autre autour du tuyau (3), en direction du pourtour, et chacune des têtes de mesurage (L1, L2, L3, L4) enduisant une section respective de la paroi de tuyau.

2. Procédé selon la revendication 1,
**caractérisé en ce que**
parmi quatre têtes de mesurage (L1, L2, L3, L4) au maximum, réparties sur le pourtour du tuyau (3), au moins l'une des têtes de mesurage est pivotée dans le sens du pourtour du tuyau (3), selon un segment angulaire à déterminer en fonction de l'ordre attendu de la structure interne indésirable.

3. Procédé selon les revendications 1 ou 2,
**caractérisé en ce que**
les cycles de pivotement des têtes de mesurage (L1, L2, L3, L4) sont définis en fonction de la vitesse de laminage.

4. Dispositif pour le mesurage sans contact d'épaisseurs de parois chaudes en ligne, pour la détection de structures indésirables dans les parois internes, telles que des polygones internes ou autres, sur des tuyaux laminés à chaud,
**caractérisé en ce que**
plusieurs têtes de mesurage à ultrasons laser (L1, L2, L3, L4) pouvant être appliquées sur la dimension de tuyau à mesurer, dans lesquelles des lasers d'excitation et d'éclairage (8) sont installés ensemble avec des éléments optiques (9), pour la collecte de la lumière porteuse contenant le signal ultrason et réfléchie à la surface du tuyau (3), les têtes de mesurage à ultrasons laser (L1, L2, L3, L4) pouvant être pivotées dans un sens et dans l'autre autour du tuyau (3), dans le sens du pourtour, au moyen d'un dispositif de pivotement appartenant au dispositif.

5. Dispositif selon la revendication 4,
**caractérisé en ce que**
les têtes de mesurage à ultrasons laser (L1, L2, L3, L4) sont reliées avec une électronique d'évaluation et de commande (6).

6. Dispositif selon les revendications 4 ou 5,
**caractérisé en ce que**
les signaux de sortie de l'évaluation à ultrasons, correspondant aux valeurs des épaisseurs de paroi, sont traités par un ordinateur appartenant au système.

7. Dispositif selon l'une des revendications 4 à 6,
**caractérisé en ce que**
pour le mesurage de tuyaux (3) réduits par étirement, dont les présente invention-tubes ont été réalisés au cours d'un procédé de laminage en biais, trois têtes de mesurage (L1, L2, L3) sont réparties de manière régulière autour du pourtour du tuyau (3) et peuvent être pivotées ensemble de 70°.

8. Dispositif selon l'une des revendications 4 à 6,
**caractérisé en ce que**
pour le mesurage de tuyaux (3) réduits par étirement, dont les présente invention-tubes ont été au cours d'un procédé de laminage en biais, quatre têtes de mesurage (L1, L2, L3, L4) sont réparties de manière régulière autour du pourtour du tuyau (3), parmi lesquelles au moins une tête de mesurage peut être pivotée de 70°.

9. Dispositif selon l'une des revendications 4 à 6,
**caractérisé en ce que**
pour le mesurage de tuyaux (3) pré-laminés, réduits par étirement dans une ligne continue, trois ou quatre têtes de mesurage (L1, L2, L3, L4) sont réparties sur le pourtour du tuyau (3), parmi lesquelles au moins une tête de mesurage peut être pivotée de 90°.

10. Dispositif selon l'une des revendications 4 à 9,
**caractérisé en ce que**
les angles de pivotement des têtes de mesurage (L1, L2, L3, L4) se chevauchent partiellement.
